Europäisches Patentamt

European Patent Office

Office européen des brevets

(19)

(11) **EP 0 667 322 B1**

(12) **EUROPEAN PATENT SPECIFICATION**

(45) Date of publication and mention
of the grant of the patent:
**10.01.2001 Bulletin 2001/02**

(21) Application number: **94925026.0**

(22) Date of filing: **30.08.1994**

(51) Int Cl.[7]: **C04B 35/115**, C04B 35/645

(86) International application number:
**PCT/JP94/01429**

(87) International publication number:
**WO 95/06622 (09.03.1995 Gazette 1995/11)**

(54) **LIGHT-PERMEABLE CERAMIC MATERIAL AND METHOD OF MANUFACTURING THE SAME**

LICHTDURCHLÄSSIGES KERAMISCHES MATERIAL UND HERSTELLUNGSVERFAHREN

MATERIAU CERAMIQUE LAISSANT PASSER LA LUMIERE ET PROCEDE DE FABRICATION
CORRESPONDANT

(84) Designated Contracting States:
**DE GB NL**

(30) Priority: **02.09.1993 JP 24202593**
**28.02.1994 JP 2985394**

(43) Date of publication of application:
**16.08.1995 Bulletin 1995/33**

(73) Proprietor: **TOTO LTD.**
**Kitakyushu-shi Fukuoka 802 (JP)**

(72) Inventors:
• **WAJIMA, Naohito, Toto Ltd.**
**Kita-kyusyu-shi, Fukuoka 802 (JP)**
• **BUNDO, Tetsuaki, Toto Ltd.**
**Kita-kyusyu-shi, Fukuoka 802 (JP)**
• **HAYASHI, Koichi, Toto Ltd.**
**Kita-kyusyu-shi, Fukuoka 802 (JP)**

(74) Representative: **Skailes, Humphrey John et al**
**Frank B. Dehn & Co.,**
**European Patent Attorneys,**
**179 Queen Victoria Street**
**London EC4V 4EL (GB)**

(56) References cited:
**EP-A- 0 380 011**        **EP-A- 0 381 524**
**JP-A- 4 193 760**        **JP-A- 4 370 643**

• **CHEMICAL ABSTRACTS, vol. 117, no. 22, 30 November 1992 Columbus, Ohio, US; abstract no. 218585a, K.UEMATSU ET AL. 'COLORED, TRANSPARENT ALUMINA CERAMICS AND THEIR MANUFACTURE' page 413; column R; & JP-A-04 193 760 (NIPPON KOKAN KK) 13 July 1992**
• **PATENT ABSTRACTS OF JAPAN vol. 177, no. (C-1145) & JP 05 238 810 A (ONODA CEMENT CO.,LTD.) 17 September 1993**
• **DATABASE WPI Week 8716 Derwent Publications Ltd., London, GB; AN 87-113121 & JP-A-62 059 526 (DAIMEI KK) , 16 March 1987**
• **CHEMICAL ABSTRACTS, vol. 82, no. 8, 24 February 1975 Columbus, Ohio, US; abstract no. 47141e, T.KAJIHARA 'TRANSPARENT POLYCRYSTALLINE CERAMICS' page 258; column L; & DATABASE WPI Week 7423 Derwent Publications Ltd., London, GB; AN 74-42881v & JP-B-49 019 085 (NGK INSULATORS) , 15 May 1974**
• **PATENT ABSTRACTS OF JAPAN vol. 011 no. 030 (C-400) ,29 January 1987 & JP-A-61 201619 (AGENCY OF IND SCIENCE & TECHNOL;OTHERS: 01) 6 September 1986**
• **JOURNAL OF MATERIALS SCIENCE, vol. 28, 1993 pages 1788-1792, K.UEMATSU ET AL.**
• **CRC Handbook of Chemistry and Physics, 69th Ed., 1988-1989, CRC Press,Boca Raton, Fla., USA, page D-76**

**Description**

TECHNICAL FIELD

The present invention relates to light-transmissive ceramics composed of polycrystalline alumina or the like and a method of manufacturing such light-transmissive ceramics, and more particularly to light-transmissive ceramics that can be used as a material of a light-emitting bulb for a high-intensity discharge lamp such as a metal-halide lamp and a method of manufacturing such light-transmissive ceramics.

BACKGROUND ART

High-intensity discharge (HID) lamps such as metal halide lamps have attracted much attention for use as light sources for illuminating devices in buildings and also for overhead projectors (OHD) and color liquid-crystal projectors. Such a high-intensity discharge lamp comprises a light-transmissive light-emitting bulb containing a metal halide such as $ScI_3$ sealed therein. When a high voltage is applied between electrodes disposed in the light-emitting bulb, an arc discharge is generated to evaporate the sealed metal halide with the heat of the arc discharge into a metal and a halogen for thereby enabling the light-emitting bulb to emit light in a color peculiar to the metal.

The light-transmissive light-emitting bulb have heretofore been made of quartz ($SiO_2$). However, since the quartz has poor corrosion resistance and insufficient thermal shock resistance, there has been proposed a high-intensity discharge lamp having a light-emitting bulb made of light-transmissive alumina (polycrystalline alumina). Light-transmissive alumina for use as a material of light-emitting bulb is required to have high mechanical strength and linear transmittance (in-line transmittance).

It has been proposed to produce polycrystalline alumina of uniform structure by firing highly pure alumina with a small amount MgO added as a grain growth inhibitor, as disclosed in U.S. patent No. 3,026,210, or to add $La_2O_3$ and $Y_2O_3$ besides MgO for producing a grain boundary phase and further to equalize the diameters of alumina crystal particles for increased in-line transmittance, as revealed in Japanese patent publication No. 57-37554.

JP-A-04-193760 describes light-transmissive alumina formed by sintering and hot isostatic pressing a mixture of alumina and a Pr,Nd or Er oxide or precursor,usually with a colourant (e.g.$Cr_2O_3$) and a sintering aid(e.g.MgO).

Processes of firing a molded body produced by a casting process in an $H_2$ atmosphere at a temperature of 1700°C or higher in order to increase the linear transmittance and the freedom for shapes of light-emitting bulbs are disclosed in Japanese laid-open patent publications Nos. 59-138047 and 59-184450 and Japanese patent publication No.3-69859. In these processes, a light-emitting bulb having smaller-diameter opposite ends and a larger-diameter barrel is molded according to slip-casting, and then fired in an $H_2$ atmosphere, so that the produced light-emitting bulb has an excellent light-emitting capability with no air bubbles present therein.

According to the process in which MgO is added to highly pure alumina, MgO makes a solid solution with $Al_2O_3$, producing a structure different from the crystalline structure of $Al_2O_3$ in the crystal grain boundary of $Al_2O_3$ (interstitial solid solution). Since the polycrystalline alumina thus produced has a stoichiometric deviation and hence a nonstoichiometric extent, an oxygen defect occurs which is responsible for the absorption of black bodies. This tendency manifests itself in vacuum at high temperatures, i.e., under conditions in which high-intensity discharge lamps are used.

According to the process in which $La_2O_3$ and $Y_2O_3$ are added besides MgO, abnormal grain growth tends to be promoted at high temperatures higher than 1700°C. Even if the produced light-emitting bulb has attained the desired light-transmissive property, it has very poor thermal shock resistance and mechanical strength.

Furthermore, the added MgO has a smaller standard Gibbs energy of formation ($\Delta Gf°$) than $Al_2O_3$, and low thermodynamic stability. If MgO is used as a material of a light-emitting bulb, it is apt to react with materials sealed in the light-emitting bulb, particularly Sc (scandium) and MgO present in the grain boundary of $Al_2O_3$, resulting in corrosion.

Efforts to increase the particle diameter to reduce internal diffusion pose a certain limitation on an increased light-transmitting capability. The light-transmitting capability may be increased by grinding the surface of light-transmissive ceramics to reduce the surface roughness (Ra) thereof. However, no light-transmissive ceramics strong enough to withstand machining has been obtained so far.

Even when a light-emitting bulb is made of highly pure alumina, it still contains certain amounts of impurities including Mg, Ca, Si, Fe, Cr, Ni, etc.

When Mg (MgO) is contained, it causes the following reaction, eliminating a light-emitting substance ($ScI_3$):

$$3MgAl_2O_4(\text{spinel}) + 2ScI_3$$

$$\rightarrow 2AlScO_3 + 2Al_2O_3 + 3MgI_2$$

$$Al_2O_3 + ScI_3 \rightarrow AlScO_3 + AlI_3$$

If the impurities of Mg, etc. are minimized, then it is possible to extend the service life of the high-intensity discharge lamps. However, it is difficult to physically remove those impurities in the form of minute particles. One process of chemically removing such impurities using a chelating agent is disclosed in Japanese laid-open patent publication No. 63-230550.

According to the disclosed process, a sulfide mineral contained in a clay mineral is separated by reaction with a chelating agent.

When impurities are removed from a powdery ceramic material in the production of a light-emitting bulb according to the disclosed process, however, the problem of the elimination of the light-emitting substance in a short period of time is not sufficiently solved.

DISCLOSURE OF THE INVENTION

In view of the above drawbacks, it is an object of the present invention to provide light-transmissive ceramics having excellent linear transmission, mechanical strength, thermal shock resistance, and corrosion resistance, and a method of manufacturing such light-transmissive ceramics.

The present invention has been achieved based on the recognition of the fact that the light transmittance of light-transmissive ceramics can be increased by meeting the requirements that (a) no air bubbles be contained in the light-transmissive ceramics, (b) the light-transmissive ceramics have a small surface roughness (Ra), (c) the light-transmissive ceramics be free of abnormal grain growth, and (d) the light-transmissive ceramics be made of a material having a large negative standard Gibbs energy of formation ($\Delta$Gf$^\circ$) for higher corrosion resistance.

According to the present invention, a light-transmissive ceramic is composed of a plurality of oxides (principally $Al_2O_3$ or a mixture of $Al_2O_3$ and $Sc_2O_3$) each having a negative standard Gibbs energy of formation ($\Delta$Gf$^\circ$) having an absolute value greater than 1581.9 KJ/mol, the light-transmissive ceramics being produced by subjecting the oxides to hot isostatic pressing at a high temperature under a high pressure. The ceramic comprises a composite body in which particles of at least one of the oxides, other than $Al_2O_3$, are present between particles of $Al_2O_3$, and the particles of $Al_2O_3$ have a longer axis of 30 µm or less and a shorter axis of 20 µm or less, and the particles of the other oxides have a longer axis of 10 µm or less and a shorter axis of 5 µm or less. Preferably, the light-transmissive ceramics contains a principal component of $Al_2O_3$ and an auxiliary component comprising an oxide selected from the group consisting of $La_2O_3$, $Ta_2O_3$, $Ho_2O_3$, $Y_2O_3$, $Yb_2O_3$, $Dy_2O_3$, $Sc_2O_3$, $Ce_2O_3$, $Er_2O_3$, $Lu_2O_3$, $Sm_2O_3$, and $Tm_2O_3$. According to the present invention, a method of manufacturing the light-transmissive ceramic comprises the steps of adding 0.01 ~ 18 wt% of particles of an oxide in the form of at least one of a salt and an oxide to a powder of highly pure alumina to form an molded ceramics body, holding the molded ceramics body in an atmosphere of at least one of vacuum, atmospheric air, $N_2$, Ar, $H_2$, and water vapor at a primary sintering temperature ranging from 1350°C to 1800°C for at least 0.5 hour, thereby producing a primary sintered body, and then subjecting the primary sintered body to hot isostatic pressing at a high temperature under a high gas pressure.

The present invention has also been achieved on the basis of the finding that even if impurities are removed from the materials using a chelating agent, when the completed light-transmissive ceramics is used as a material of a light-emitting bulb for a high-intensity discharge lamp, impurities newly mixed while the molded ceramics body is being produced are mainly responsible for the elimination of a light-emitting substance from the light-emitting bulb.

According to the present invention, there is also provided light-transmissive ceramics composed of a plurality of oxides each having a negative standard Gibbs energy of formation ($\Delta$Gf$^\circ$) having an absolute value greater than 1581.9 KJ/mol, the light-transmissive ceramics being produced by at least processing the oxides with a chelating agent before being fired, and subjecting the oxides to hot isostatic pressing at a high temperature under a high pressure. Preferably, the light-transmissive ceramics comprises a composite body composed principally of $Al_2O_3$ or $(Al,Sc)_2O_3$, which is equivalent to $Al_2O_3$ where part of Al is replaced with Sc, and particles of $La_2O_3$ present between the principal particles. According to the present invention, there is further provided a method of manufacturing the light-transmissive ceramic, comprising the steps of mixing a powdery ceramics material, a binder, and a deflocculant to produce a molded body of a predetermined shape, preliminarily firing the molded body, thereafter impregnating the preliminarily fired body with a chelating agent to allow ions of impurity metals in the preliminarily fired body to be coupled to the chelating agent, removing the chelating agent impregnated in the preliminarily fired body by cleaning, firing the preliminarily fired body into a fully fired body, and subjecting the latter to hot isostatic pressing at a high temperature under high pressure.

BRIEF DESCRIPTION OF THE INVENTION

Fig. 1 is a block diagram of a method of manufacturing light-transmissive ceramics of $La_2O_3/Al_2O_3$ according to a first embodiment of the present invention, the process including a hot isostatic pressing (HIP) step;

Fig. 2 is a cross-sectional view of a device used in the hot isostatic pressing step;

Fig. 3 is a graph showing a pattern of the hot isostatic pressing step;

Fig. 4 is a graph showing the relationship between conditions (temperature and pressure) of the hot isostatic pressing step and the occurrence of deficiencies;

Figs. 5(A1), 5(A2), and 5(A3) are microscopic photographic representations showing the structures of light-transmissive ceramics manufactured by the method shown in Fig. 1 according to the first embodiment of the present invention;

Figs. 6(B1), 6(B2), and 6(B3) are microscopic photographic representations showing the structures of conventional light-transmissive ceramics manufactured by a conventional method;

Fig. 7 is a graph showing particle diameter distributions of the light-transmissive ceramics shown in Figs. 5(A1), 5(A2), and 5(A3) and Figs. 6(B1), 6(B2), and 6(B3);

Fig. 8 is a graph showing the relationship between the crystal particle diameters of $Al_2O_3$, linear transmittances, bending strengths, and thermal shock resistances of the light-transmissive ceramics shown in Figs. 5(A1), 5(A2), and 5(A3) and Figs. 6(B1), 6(B2), and 6(B3);

Fig. 9 is a schematic view of the structure of light-transmissive ceramics manufactured by the method according to the first embodiment of the present invention;

Fig. 10 is a graph showing the relationship between the surface roughness and light transmittance of the light-transmissive ceramics manufactured by the method according to the first embodiment of the present invention;

Fig. 11 a graph showing, for comparison, the total transmittances (diffused transmittances) of the light-transmissive ceramics according to the present invention and the conventional light-transmissive ceramics;

Fig. 12 is a graph showing, for comparison, the linear transmittances of the light-transmissive ceramics according to the present invention and the conventional light-transmissive ceramics before and after they are heat-treated at 1500°C in the atmosphere;

Fig. 13 is a block diagram of a method of manufacturing light-transmissive ceramics according to a second embodiment of the present invention;

Fig. 14 is a block diagram of a method of manufacturing light-transmissive ceramics according to a third embodiment of the present invention;

Fig. 15 is a graph showing, for comparison, the linear transmittances of the light-transmissive ceramics manufactured by the method according to the second embodiment of the present invention and conventional light-transmissive ceramics (composition: MgO - $Al_2O_3$).

BEST MODE FOR CARRYING OUT THE INVENTION

Light-transmissive ceramics according to preferred embodiments of the present invention and methods of manufacturing same will be described in detail below with reference to the drawings.

Light-transmissive ceramics according to a first embodiment of the present invention and a method of manufacturing same have been achieved based on the recognition of the fact that the light transmittance of light-transmissive ceramics can be increased by meeting the requirements that (a) no air bubbles be contained in the light-transmissive ceramics, (b) the light-transmissive ceramics have a small surface roughness (Ra), (c) the light-transmissive ceramics be free of abnormal grain growth, and (d) the light-transmissive ceramics be made of a materiel having a negatively large standard Gibbs energy of formation (ΔGf°) for higher corrosion resistance.

The light-transmissive ceramic according to the first embodiment is composed of $Al_2O_3$ and at least one oxide whose standard Gibbs energy of formation (ΔGf°) has a negative value of - 1581.9 KJ/mol or higher, and is obtained by hot isostatic pressing (HIP) at a high temperature under a high gas pressure. The light-transmissive ceramic is of a composite structure with at least one type of oxide particles such as of $La_2O_3$, $Sc_2O_3$, $Ta_2O_3$, $Ho_2O_3$, or the like being present between particles of $Al_2O_3$. The particles of $Al_2O_3$ have a longer axis of 30 μm or less and a shorter axis of 20 μm or less, and the particles of the other oxide have a longer axis of 10 μm or less and a shorter axis of 5 μm or less.

If the longer axis of the maximum particles of $Al_2O_3$ were larger than 30 μm or the shorter axis thereof were larger than 20 μm, or if the longer axis of the maximum particles of the oxide larger than 10 μm or the shorter axis thereof were larger than 5 μm, then the light-transmissive ceramics would have an insufficient mechanical strength and would not withstand grinding.

A method of manufacturing the light-transmissive ceramics according to the first embodiment comprises the steps of adding 0.01 - 18 wt% of $La_2O_3$ in the form of a salt or an oxide to a powder of highly pure alumina to form an unfired molded ceramics body, holding the molded ceramics body in an atmosphere of either vacuum, atmospheric air, $N_2$, Ar, $H_2$, or water vapor at a temperature ranging from 1350°C to 1800°C for at least 0.5 hour, thereby producing a primary sintered body, and then subjecting the primary sintered body to hot isostatic pressing at a high temperature under a high gas pressure.

If the added amount of $La_2O_3$ were less than 0.01 wt%, then abnormal grain growth would be seen in the light-transmissive ceramics, and if greater than 18 wt%, then the light transmission capability of the light-transmissive ceramics would be greatly impaired.

The molded ceramics body is fired in an atmosphere of either vacuum, atmospheric air, $N_2$, Ar, $H_2$, or water vapor in order to complete densification thereof.

The molded ceramics body is fired at a temperature ranging from 1350°C to 1800°C because if it were fired at a temperature lower than 1350°C, then it would not be fired sufficiently, and if it were fired at a temperature higher than 1800°C, then the added $La_2O_3$ would make a solid solution with $Al_2O_3$, resulting in the absorption of black bodies.

The molded ceramics body is fired for at least 0.5 hour because if it were fired for less than 0.5 hour, then it would be difficult to achieve a uniform sintered structure.

The hot isostatic pressing is preferably carried out at a temperature ranging from 1300°C to 1800°C in an atmosphere of Ar, $N_2$, $H_2$, or $O_2$ under a pressure ranging from 500 atm to 1200 atm.

The hot isostatic pressing is carried out at a temperature ranging from 1300°C to 1800°C because if it were carried out at a temperature lower than 1300°C, then no sufficient light transmission capability would be obtained, and if it were carried out at a temperature higher than 1800°C, then the added $La_2O_3$ would make a solid solution with $Al_2O_3$, resulting in the absorption of black bodies.

The hot isostatic pressing is carried out under a pressure ranging from 500 atm to 1200 atm because if it were carried out under a pressure less than 500 atm, then no sufficient light transmission capability would be obtained, and if it were carried out under a pressure higher than 1200 atm, then cracking would take place in the light-transmissive ceramics.

When the primary sintered body is processed by the hot isostatic pressing, it is possible to eliminate air bubbles in the light-transmissive ceramics. Since the light-transmissive ceramics is of a composite structure with particles such as of $La_2O_3$ being present between particles of $Al_2O_3$, rather than an oxide with $La_2O_3$ added forming a solid solution, the sintered ceramics body is free of abnormal grain growth and composed of particles of uniform size. Because the particles of the sintered ceramics body are relatively small, the thermal shock resistance and the mechanical strength thereof are high. Consequently, the light transmission capability of the light-transmissive ceramics is increased when its surface roughness (Ra) is increased by lapping or the like.

Inasmuch as the light-transmissive ceramics includes an oxide whose standard Gibbs energy of formation ($\Delta Gf°$) has a negative value of - 1581.9 KJ/mol or higher (MgO has $\Delta Gf°$ = - 569.4 KJ/mol), the light-transmissive ceramics is thermodynamically stable and its reactability with a light-emitting substance, particularly Sc, is low, the corrosion resistance thereof is increased.

Heretofore, light-transmissive alumina ceramics with MgO added has had poor light transmission capability and poor mechanical strength because the grain boundary is eroded due to a reaction between MgO present in the grain boundary of $Al_2O_3$ and a light-emitting substance, particularly Sc.

According to this embodiment, since the light-transmissive ceramics includes an oxide whose standard Gibbs energy of formation ($\Delta Gf°$) has a negative value of - 1581.9 KJ/mol or higher, i.e., an oxide having thermodynamic stability greater than $Al_2O_3$, almost no erosion of the grain boundary of $Al_2O_3$ owing to a reaction with a light-emitting substance, particularly Sc, takes place unlike MgO ($\Delta Gf°$ = -569.4 KJ/mol).

Oxides whose standard Gibbs energy of formation ($\Delta Gf°$) has a negative value of - 1581.9 KJ/mol or higher, i.e., the value of $Al_2O_3$ or higher, include $La_2O_3$ (- 1706 KJ/mol), $Ta_2O_3$ (- 1911 KJ/mol), $Ho_2O_3$ (- 1791 KJ/mol), $Y_2O_3$ (- 1727 KJ/mol), $Yb_2O_3$ (- 1727 KJ/mol), $Dy_2O_3$ (- 1772 KJ/mol), $Sc_2O_3$ (- 1819 KJ/mol), $Ce_2O_3$ (- 1706 KJ/mol), $Er_2O_3$ (- 1809 KJ/mol), $Lu_2O_3$ (- 1789 KJ/mol), $Sm_2O_3$ (- 1735 KJ/mol), $Tm_2O_3$ (- 1795 KJ/mol), and so on.

The composite light-transmissive ceramics of $La_2O_3/Al_2O_3$ with $La_2O_3$ being present between particles of $Al_2O_3$ according to this embodiment will be described below with reference to the drawings.

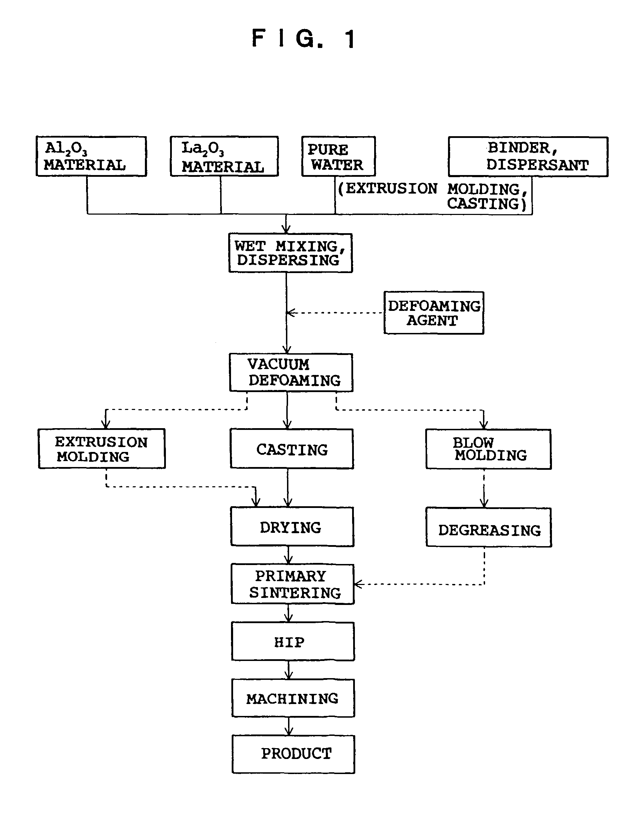

Fig. 1 shows in block form a method of manufacturing the light-transmissive ceramics of $La_2O_3/Al_2O_3$ according to the first embodiment of the present invention, the process including a hot isostatic pressing step. In the first embodiment, a material of $Al_2O_3$, a material of $La_2O_3$, pure water, a binder, and a dispersant are mixed and dispersed in a wet matter, defoamed in vacuum, and cast into a molded body. The molded body is thereafter dried and fired into a primary sintered body, which is then subjected to HIP.

Instead of being cast into a molded body, the mixed materials may be extrusion-molded or blow-molded. If the mixed materials are blow-molded, then no pure water is added to the materials, and the molded body is fired into a primary sintered body after being degreased.

The starting material of $Al_2O_3$ is a material derived from a matrix salt of AACH (ammonium·aluminum· carbonate·hydroxide) and having a purity of 4 N (4 nines) or higher and particle diameters ranging from 0.05 µm to 1.0 µm. The starting material of $La_2O_3$ is a material having a purity of 3 N or higher and particle diameters ranging from 0.1 µm to 2.0 µm.

The binder is made of methyl cellulose, polyvinyl alcohol, acrylic emulsion, sugar alcohol, or the like. The dispersant is made of an ammonium salt such as polycarboxylic acid, polyacrylic acid, or the like.

The material of $La_2O_3$ is added in a range of from 0.01 wt% to 18 wt% to the material of $Al_2O_3$ ranging from 99.8 wt% to 82 wt%. To the mixture (powdery mixture), there are added the binder and the dispersant in a range of from 0.2 % to 1 % and the pure water in a range of from 20 % to 100 %. The mixed constituents are then mixed in a wet manner for 10 hours by a ball mill, thereby producing a slurry.

If necessary, an anti-foaming agent is added to the slurry to defoam the slurry in vacuum. Thereafter, the slurry is cast into a plaster mold, a porous resin mold, or a porous ceramics mold, thereby forming an unfired molded ceramics body.

The unfired molded ceramics body is in the form of a light-emitting bulb for a high-intensity discharge lamp. According to the casting process, the slurry may be molded into any of various shapes, e.g., a light-emitting bulb having sealed ends whose diameter is 1/2 or less of the diameter of its central region, the sealed ends smoothly blending into the central region. The light-emitting bulb of the above configuration prevents a metal vapor from leaking out, is free of cracks, and has a high light emission efficiency.

Since a component of Ca may be mixed into the molded ceramics body, the molded ceramics body may be preliminarily fired and cleaned in hot water (acid) after it has been molded, for thereby removing any component of Ca.

After the unfired molded ceramics body as a light-emitting bulb has been dried, it is fired into the primary sintered body in an atmosphere of either vacuum, atmospheric air, $N_2$, Ar, $H_2$, or water vapor at a temperature ranging from 1350°C to 1800°C for at least 0.5 hour. The primary sintered body has a bulk density of 98 % or higher.

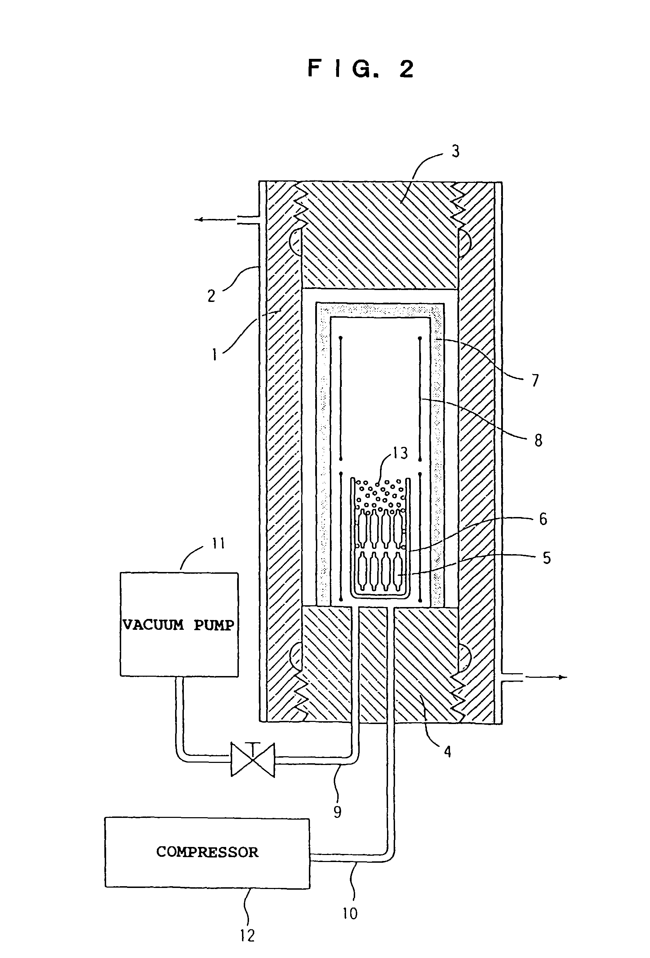

Thereafter, the primary sintered body is subjected to HIP. Fig. 2 shows a HIP device for processing the primary sintered body with HIP. As shown in Fig. 2, the HIP device has a water-cooled jacket 2 disposed around a pressure vessel 1 having upper and lower ends closed by respective upper and lower lids 3, 4. The pressure vessel 1 houses therein a heat-insulating layer 7 in surrounding relation to a crucible 6. A heater 8 is disposed inwardly of the heat-insulating layer 7. The space inside of the pressure vessel 1 is connected to a vacuum pump 11 and a compressor 12 through pipes 9, 10 that extend through the lower lid 4.

Light-emitting bulbs 5 in the form of primary sintered bodies are placed in the crucible 6, and beads 13 of the same materials as the light-emitting bulbs 5 are filled in the crucible 6 above the light-emitting bulbs 5. With the light-emitting bulbs 5 covered with the beads 13, the crucible 6 is set in the space inside of the pressure vessel 1. Then, the light-emitting bulbs 5 are subjected to HIP. The sintering of the light-emitting bulbs 5 is sufficiently completed because they are fired while the beads 13 of the same materials as the light-emitting bulbs 5 are filled in the crucible 6.

The beads 13 may alternatively be of the same principal material, e.g., $Al_2O_3$, of the light-emitting bulbs 5, or of a material of a grain growth inhibitor, e.g., MgO. If a grain growth inhibitor which is not of the same material as the light-emitting bulbs, then the grain growth inhibitor may possibly remain as an impurity on the surfaces of the light-emitting bulbs. Since the impurity exists only on the surfaces of the light-emitting bulbs, it can easily be removed subsequently. Under normal conditions, the crucible 6 that is made of a grain growth inhibitor is not involved in the inhibition of grain growth at all. At a high temperature of 1350°C or higher and under a high pressure of 500 atm or higher, however, the crucible 6 that is made of a grain growth inhibitor is considered to inhibit grain growth in surface boundaries of the sintered alumina bodies because the constituent elements of the crucible 6 exist in the atmosphere.

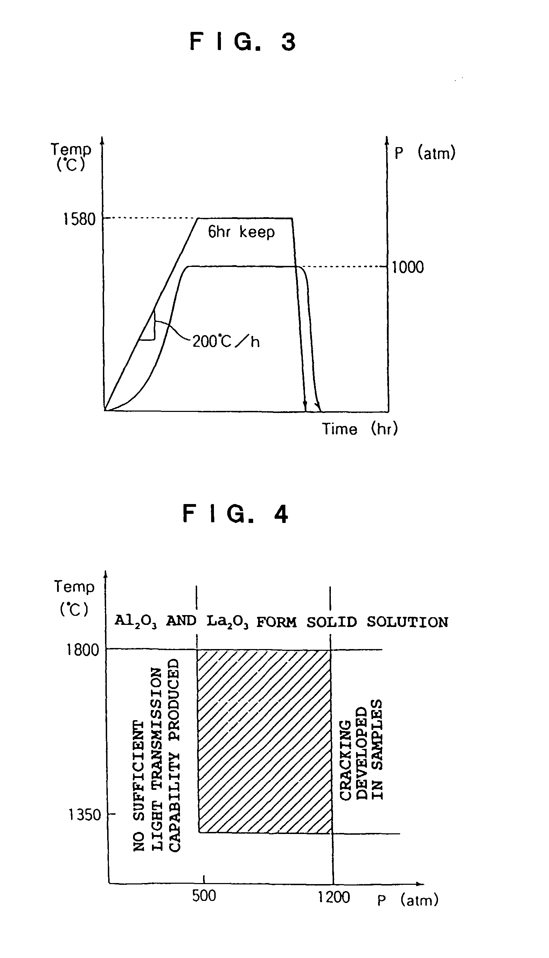

One example of conditions of the HIP are shown in Fig. 3. The HIP is carried out by increasing the temperature from the room temperature up to 1580°C at a rate of 200°/h. and then holding the temperature of 1580°C for six hours. At the same time that the temperature is increased, the internal pressure is increased, and then held at 1000 atmospheric pressures for six hours. An atmospheric gas is composed of at least one of $N_2$, Ar, $H_2$, and $O_2$.

Fig. 4 is a graph showing a preferable range of conditions for the HIP. As can be seen from Fig. 4, no sufficient light transmission capability would be achieved at a temperature lower than 1300°C, and $La_2O_3$ would make a solid solution with $Al_2O_3$, resulting the absorption of black bodies, if the temperature exceeded 1800°C. No sufficient light transmission capability would be achieved under a pressure lower than 500 atm, and cracks would be developed if the pressure exceeded 1200 atm. Therefore, the HIP should preferably be carried out at a temperature ranging from 1300°C to 1800°C under a pressure ranging from 500 atm to 1200 atm.

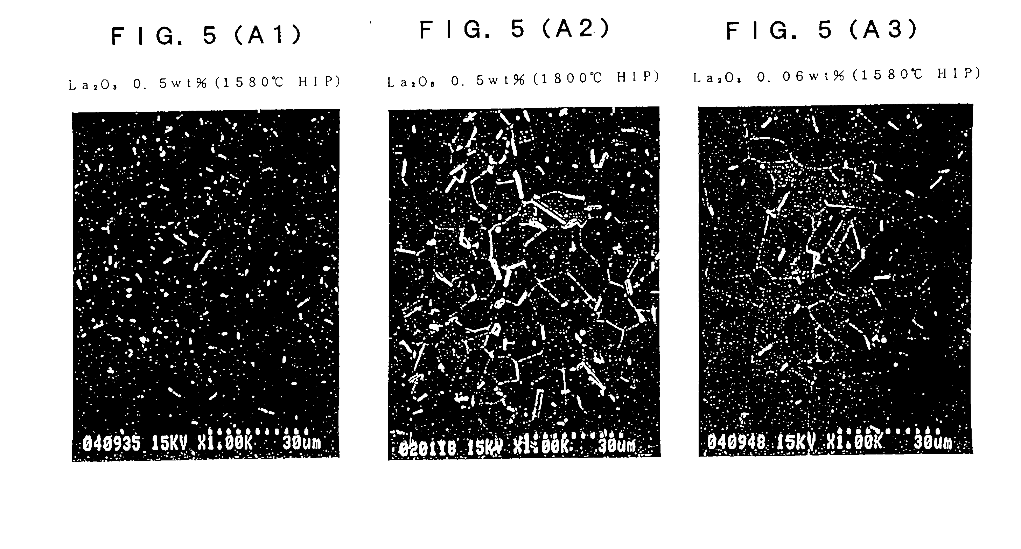

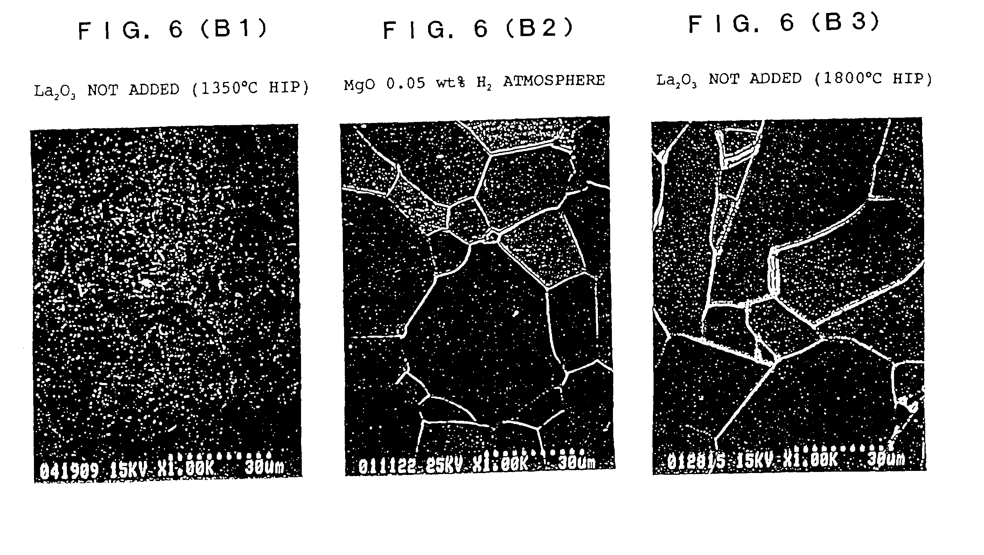

Figs. 5(A1), 5(A2), and 5(A3) are microscopic photographic representations showing the structures of light-transmissive ceramics (A1) ∼ (A3) manufactured under the above conditions according to the above embodiment of the present invention, and Figs. 6(B1), 6(B2), and 6(B3) are microscopic photographic representations showing the structures of conventional light-transmissive ceramics (B1) ∼ (B3) manufactured by a conventional method. Details of the conditions under which these light-transmissive ceramics are manufactured are given below.

(A1)... $La_2O_3$ 0.5 wt% added 1580°C, 1000 atm (inventive)

(A2)... $La_2O_3$ 0.5 wt% added 1800°C, 1000 atm (inventive)
(A3)... $La_2O_3$ 0.06 wt% added 1580°C, 1000 atm (inventive)
(B1)... $La_2O_3$ not added 1350°C, 1000 atm (conventional)
(B2)... MgO 0.05 wt% added 1800°C, in a stream of hydrogen (conventional)
(B3)... $La_2O_3$ not added 1800°C, 1000 atm (conventional)

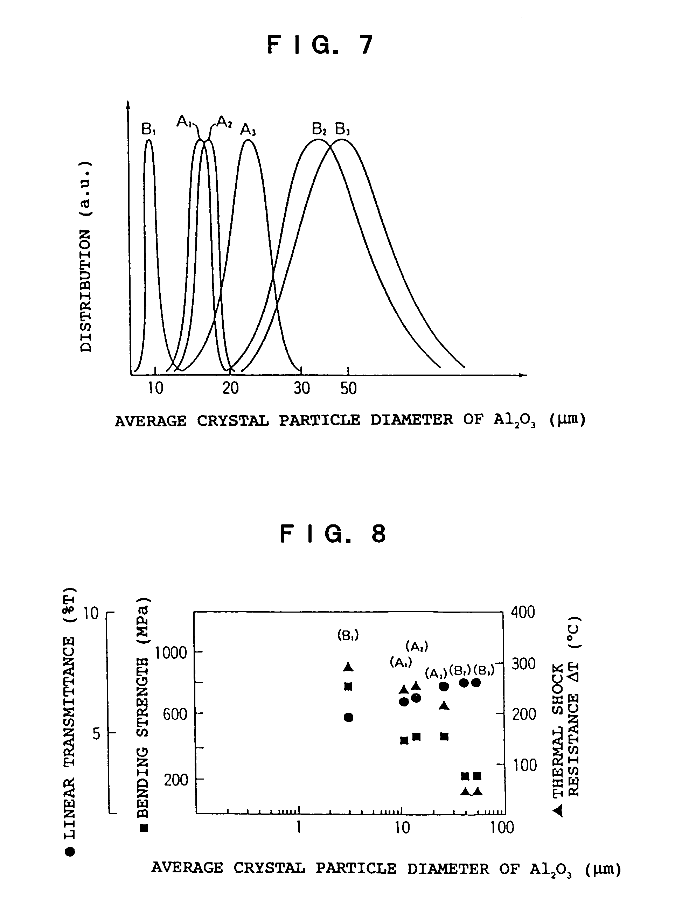

The light-transmissive ceramics indicated by (A1) ~ (A3), (B1) ~ (B3) are arranged successively in the ascending order of average crystal particle diameter of $Al_2O_3$ as shown in the graph of Fig. 7. Fig. 8 is a graph showing the linear transmittances, bending strengths, and thermal shock resistances of the light-transmissive ceramics (A1) ~ (A3), (B1) ~ (B3).

It can be seen from these graphs that the conventional light-transmissive ceramics (B1) has a small average crystal particle diameter of $Al_2O_3$ and a sharp crystal particle diameter distribution curve, and is satisfactory with respect to bending strength and thermal shock resistance though its linear transmission is not sufficient, as shown in Fig. 8.

The conventional light-transmissive ceramics (B2), (B3) have high linear transmission because their average crystal particle diameters of $Al_2O_3$ are small, but have wide crystal particle diameter distribution curves and suffers high abnormal grain growth. As a result, the conventional light-transmissive ceramics (B2), (B3) have poor bending strength and thermal shock resistance.

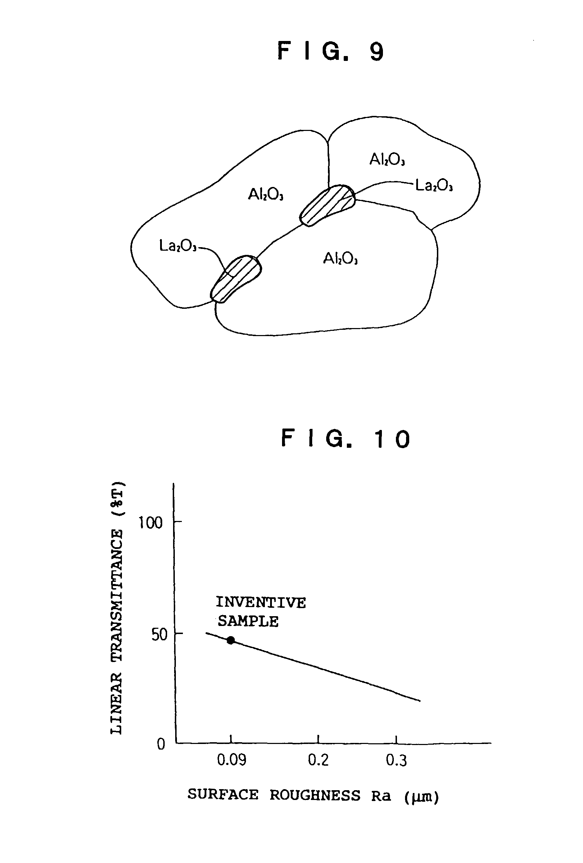

As shown in Fig. 9, the structures of the inventive light-transmissive ceramics (A1), (A2), and (A3) are of composite nature with particles of $La_2O_3$ being present between particles of $Al_2O_3$, rather than $La_2O_3$ forming a solid solution with $Al_2O_3$. The particles of $La_2O_3$ serve to inhibit the growth of the particles of $Al_2O_3$. The structures of the inventive light-transmissive ceramics (A1), (A2), and (A3) are effective in absorbing and inhibiting the development of cracks under various stresses.

In the composite bodies of the light-transmissive ceramics, the particles of $La_2O_3$ have sizes that are 1/3 to 1/30 of the particles of $Al_2O_3$. Maximum particles of $Al_2O_3$ have a longer axis of 30 μm or less and a shorter axis of 20 μm or less, and maximum particles of $La_2O_3$ or the like have a longer axis of 10 μm or less and a shorter axis of 5 μm or less. Both of the particles of $La_2O_3$ and the particles of $Al_2O_3$ do not essentially contain abnormal grain growth particles whose diameters are three times or more the average crystal particle diameter, and have sharp diameter distribution curves.

As a consequence, as shown in Fig. 8, either of the inventive light-transmissive ceramics (A1), (A2), and (A3) has a linear transmission of 4 % or higher at a wavelength of 600 nm, and high bending strength and thermal shock resistance.

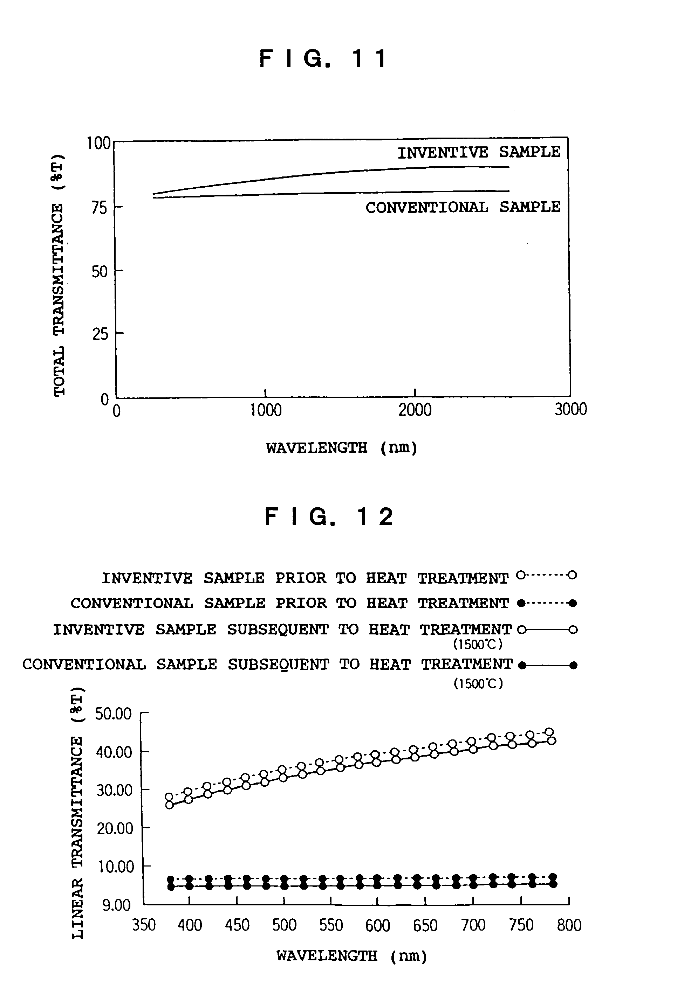

Fig. 10 is a graph showing the relationship between the surface roughness and light transmittance of the light-transmissive ceramics manufactured by the casing process according to the first embodiment of the present invention, the light-transmissive ceramics including an inner surface having an excellent average surface roughness (Ra) of 0.09 μm and an outer surface which is ground (lapped). Since the light-transmissive ceramics according to the present invention has a mechanical strength sufficient to withstand grinding, the outer surface may be ground to an average surface roughness of 0.1 μm or less.

The light-transmissive ceramics manufactured according to the conventional method have an average surface roughness (Ra) of about 2.7 μm and are not sufficiently strong. When the surfaces of the conventional light-transmissive ceramics are ground, they suffer cracks and hence are less light-transmissive.

Particularly, if a molded ceramics body is produced by extrusion molding, then since particles of $Al_2O_3$ are not crystallographically isotropic, the direction in which cracks are produced in resulting light-transmissive ceramics has certain regularity.

Fig. 11 a graph showing, for comparison, the total transmittances (diffused transmittances) of the light-transmissive ceramics according to the present invention and the conventional light-transmissive ceramics. It can be seen that the light-transmissive ceramics according to the present invention are better than the conventional light-transmissive ceramics with respect to the total transmittance.

Fig. 12 is a graph showing, for comparison, the linear transmittances of the light-transmissive ceramics according to the present invention and the conventional light-transmissive ceramics before and after they are heat-treated at 1500°C in the atmosphere. A study of Fig. 12 indicates that the light-transmissive ceramics according to the present invention are better than the conventional light-transmissive ceramics with respect to heat resistance.

As can be understood from the above description and the results of tests effected on the samples shown in Figs. 4 through 11, $La_2O_3$ can effectively be operated as a grain growth inhibitor by adding 0.01 ~ 18 wt% of $La_2O_3$ in the form of a salt or an oxide to a powder of highly pure alumina according to the manufacturing method of the present invention.

According to the manufacturing method of the present invention, furthermore, the mixed powder of highly pure alumina is fired into a primary sintered body under given conditions, and the primary sintered body is subjected to hot isostatic pressing at a predetermined high temperature under a predetermined high gas pressure. Therefore, the particle diameters of $Al_2O_3$ are reduced (the light-transmissive ceramics shown in Figs. 5(A1), 5(A2) have the same added amount of $La_2O_3$ but are subjected to HIP under different conditions), so that their light transmission capability and mechanical strength characteristics are expected to have a wide range.

According to the present invention, moreover, the light-transmissive ceramics is of a composite structure with particles of $La_2O_3$ or the like being present between particles of $Al_2O_3$, and maximum particles of $Al_2O_3$ have a longer axis of 30 μm or less and a shorter axis of 20 μm or less, and maximum particles of $La_2O_3$ or the like have a longer axis of 10 μm or less and a shorter axis of 5 μm or less. Consequently, if the light-transmissive ceramics is in the form of a tube having a thickness of 0.75 mm, then it provides an in-line transmittance (linear transmittance) of 4 % or higher and a total transmittance of 75 % or higher with respect to visible light having a wavelength of 600 nm (as measured by Double-beam spectrophotometers U-2000, U-4000 manufactured by Hitachi, Ltd.), and has much greater thermal shock resistance and mechanical strength than the conventional light-transmissive ceramics.

Inasmuch as the light-transmissive ceramics according to the present invention is of high mechanical strength, it can sufficiently withstand lapping. Therefore, the average surface roughness is minimized to reduce surface diffusion for a greatly increased light transmission capability.

Since the light-transmissive ceramics includes an oxide whose standard Gibbs energy of formation (ΔGf°) has a negative value of - 1581.9 KJ/mol or higher, i.e., an oxide having thermodynamic stability greater than $Al_2O_3$, almost no erosion of the grain boundary of $Al_2O_3$ owing to a reaction with a light-emitting substance, particularly Sc, takes place unlike MgO (ΔGf° = - 569.4 KJ/mol).

When the unfired molded ceramics body is fired into a primary sintered body according to the first embodiment, it is fired according to such a heat curve that the temperature is increased up to a sintering temperature of 1350°C, for example, and then kept at the sintering temperature until the firing of the molded ceramics body is completed. Because the firing process progresses slowly, however, the molded body may possibly be warped or $SiO_2$ evaporated from the heater material may possibly enter the molded ceramics body from its surface and be trapped in the sintered body, tending to deteriorate the light-emitting bulb.

To avoid the above drawback, the unfired molded ceramics body is first heated up to a temperature higher than the above sintering temperature (e.g., 1350°C → 1400°C), and after the surface of the molded ceramics body is sintered (e.g., in five minutes), the temperature is lowered down to the sintering temperature (1350°C) at which the molded ceramics body is continuously fired. Since the surface of the molded ceramics body has already been sintered, the inside of the molded ceramics body can be sintered while its shape is being maintained, and hence the molded ceramics body is prevented from being warped while being fired. Even when evaporated $SiO_2$ is attached to the surface of the molded ceramics body, it does not enter the molded ceramics body, and the attached $SiO_2$ can easily be removed in a subsequent step.

Light-transmissive ceramics according to a second embodiment of the present invention and a method of manufacturing such light-transmissive ceramics will be described below with reference to the drawings. The light-transmissive ceramics according to the second embodiment and the method of manufacturing same differ from the light-transmissive ceramics according to the first embodiment and the method of manufacturing same in that a molded ceramics body is processed by a chelating agent with a view to removing ions of impurity metals such as Ca, Mg, etc. mixed in the molded ceramics body, and that the molded ceramics body is processed by a hydrofluoric acid with a view to removing Si from the molded ceramics body after it has been processed by the chelating agent or subjected to the HIP step.

The inventors have found that even if impurities are removed from the materials using a chelating agent, when the completed light-transmissive ceramics is used as a material of a light-emitting bulb for a high-intensity discharge lamp, impurities newly mixed while the molded ceramics body is being produced are mainly responsible for the elimination of a light-emitting substance from the light-emitting bulb. Stated otherwise, the inventors have found that even though the materials are highly pure, it is not possible to completely prevent impurities from being mixed into the materials when the materials are being subsequently molded. According to the second embodiment, after a ceramics body molded to a given shape is preliminarily fired, the preliminarily fired ceramics body is impregnated with a chelating agent, allowing ions of impurity metals in the preliminarily fired ceramics body to be coupled to the chelating agent. Then, the chelating agent impregnated in the preliminarily fired ceramics body is removed by cleaning, after which the preliminarily fired ceramics body is fired. Specifically, the preliminarily fired ceramics body is ultrasonically cleaned to effectively remote the chelating agent impregnated in the preliminarily fired ceramics body together with the impurity metals. After the preliminarily fired ceramics body is processed by the chelating agent, or after the preliminarily fired ceramics body is fired, the ceramics body is processed by a hydrofluoric acid to remove Si effectively. The chelating agent is composed of EDTA, for example, with a pH ranging from 8 to 10 for mainly removing Ca and Mg and leaving La or the like that is effective to increase corrosion resistance.

A light-emitting bulb made of the light-transmissive ceramics according to the second embodiment is primarily composed of $(Al,Sc)_2O_3$, which is equivalent to $Al_2O_3$ where part of Al is replaced with Sc, and does not essentially contain Ca, Mg, and Si. The light-emitting bulb has a linear transmittance of 40 % or higher per thickness of 1 mm with respect to light having a wavelength of 600 nm, a mechanical strength of 235 MPa or higher, a thermal shock resistance of 150 $\Delta$T°C or greater, a thermal conductivity of 0.08 cal/cm·sec·°C or greater, and a softening point of 1200 °C or higher.

After the ceramics body is fully fired, since the pores thereof are closed, it is not possible to impregnate the fired ceramic body with the chelating agent to the inside of the fired ceramic body, or to remove the impregnated chelating agent together with the impurities. However, the preliminarily fired ceramics body can be impregnated with the chelating agent to the inside thereof, and the chelating agent coupled to ions of impurity metals of Mg, Si, etc. can be removed from within the preliminarily fired ceramics body because pores thereof are continuous. Since the preliminarily fired ceramics body is closer in its state to the final ceramics body than the powdery materials, there is little chance for impurities to be mixed into the preliminarily fired ceramics body in the preliminarily firing step and subsequent steps.

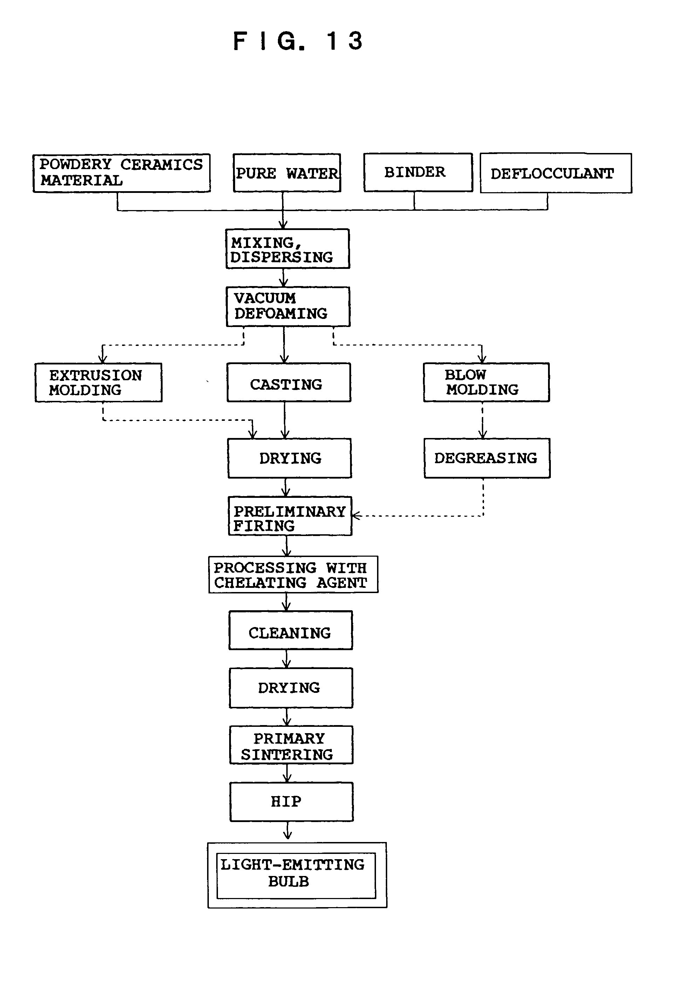

Fig. 13 shows in block form a method of manufacturing the light-transmissive ceramics according to the second embodiment of the present invention. In the second embodiment, a material of $Al_2O_3$, a material of $Sc_2O_3$, a material of $La_2O_3$, which are powdery ceramics materials, pure water, a binder, a deflocculant, and a dispersant are mixed and dispersed in a wet manner, defoamed in vacuum, and cast into a molded body. The molded body is thereafter dried into an unfired molded ceramics body, which is then preliminarily fired.

Instead of being cast into a molded body, the mixed materials may be extrusion-molded or blow-molded. If the mixed materials are blow-molded, then no pure water is added to the materials, and the molded body is fired into a primary sintered body after being degreased.

After the unfired molded ceramics body is preliminarily fired, the preliminarily fired ceramics body is processed by a chelating agent, allowing ions of impurity metals in the preliminarily fired ceramics body to be coupled to the chelating agent. Then, the chelating agent impregnated in the preliminarily fired ceramics body, i.e., the chelating agent that has entrapped the ions of impurity metals, is removed out of the preliminarily fired ceramics body with pure water by ultrasonic cleaning. Thereafter, the preliminarily fired ceramics body is fired into a primary fired ceramic body, which is then subjected to HIP thereby producing a light-emitting bulb of light-transmissive ceramics.

The starting material of $Al_2O_3$ is a material derived from a matrix salt of AACH (ammonium·aluminum· carbonate·hydroxide) and having a purity of 4 N (4 nines) or higher and particle diameters ranging from 0.05 μm to 1.0 μm. The starting material of $Sc_2O_3$ is a material having a purity of 3 N or higher and particle diameters ranging from 0.5 μm to 10 μm. The starting material of $La_2O_3$ is a material having a purity of 3 N or higher and particle diameters ranging from 0.1 μm to 2.0 μm.

The binder is made of methyl cellulose, polyvinyl alcohol, acrylic emulsion, sugar alcohol, or the like. The dispersant is made of an ammonium salt such as polycarboxylic acid, polyacrylic acid, or the like.

If the mixed materials are to be cast into a plaster mold, a porous resin mold, or a porous ceramics mold, then the material of $Sc_2O_3$ is added in a range of from 0.005 wt% to 15 wt% and the material of $La_2O_3$ is added in a range of from 0.01 wt% to 18 wt%. To the mixture (powdery mixture), there are added the binder and the dispersant in a range of from 0.2 % to 1 % and the pure water in a range of from 20 % to 100 %. The constituents are then mixed in a wet manner for 10 hours by a ball mill, thereby producing a slurry.

The unfired molded ceramics body is preliminarily fired at a temperature ranging from 600°C to 1200°C so as to achieve a porosity ranging from about 20 % to 50 %. In the second embodiment, the porosity is an important factor. If the porosity were too large, the preliminarily fired ceramics body would have insufficient mechanical strength and would not be handled with ease. If the porosity were too small, the chelating agent would not be impregnated in the preliminarily fired ceramics body in a subsequent step, making it impossible to process the preliminarily fired ceramics body with the chelating agent.

To impregnate the preliminarily fired ceramics body with the chelating agent, the preliminarily fired ceramics body is immersed in an aqueous solution of chelating agent, and air bubbles in the preliminarily fired ceramics body are removed by a vacuum pump for one hour or longer.

The chelating agent may comprise EDTA, DPTA, EDDA, or EDDP, and the chelating agent in the aqueous solution should preferably have such a concentration that it contains a number of moles at least twice the total number of moles of impurities to be removed.

The aqueous solution of chelating agent (EDTA) should preferably have a pH ranging from 8 to 10. When the preliminarily fired ceramics body is processed by a chelating agent having such a pH, the chelating agent is selectively coupled to metal ions. That is, Ca, Mg, etc. are coupled to the chelating agent and removed, and La and Sc that have been added as starting materials are left.

As a result, the produced light-emitting bulb is of a composite nature with particles of $La_2O_3$ being present between particles of $(Al,Sc)_2O_3$, which is equivalent to $Al_2O_3$ where part of Al is replaced with Sc. The sintered ceramics body is free of abnormal grain growth and composed of particles of uniform size. Because the particles of the sintered ceramics body are relatively small, the thermal shock resistance and the mechanical strength thereof are high. With $Sc_2O_3$ introduced, no reaction progresses between a light-emitting substance of Sc or the like and $Al_2O_3$. Since the

standard Gibbs energy of formation ($\Delta Gf^\circ$) of $La_2O_3$ is -1706.0 KJ/mol which is of a negative value larger than the standard Gibbs energy of formation of $Al_2O_3$ which is - 1581.9 KJ/mol, the sintered ceramics body is thermodynamically stable and its reactability with a light-emitting substance such as Sc is low, with the result that the corrosion resistance thereof is increased.

The chelating agent which has entrapped the impurity metal ions is then removed out of the preliminarily fired ceramics body with pure water by ultrasonic cleaning based on the difference between concentrations. Thereafter, the preliminarily fired ceramics body is dried, and then fired into a primary sintered body in an atmosphere of either vacuum, atmospheric air, $N_2$, Ar, $H_2$, or water vapor at a temperature ranging from 1350°C to 1800°C for at least 0.5 hour. The primary sintered body has a bulk density of 98 % or higher.

Thereafter, the primary sintered body is subjected to hot isostatic pressing (HIP). The hot isostatic pressing is preferably carried out at a temperature ranging from 1300°C to 1800°C under a pressure ranging from 500 atm to 1200 atm. Specifically, the HIP is carried out by increasing the temperature from the room temperature up to 1580°C at a rate of 200°/h. and then holding the temperature of 1580°C for six hours. At the same time that the temperature is increased, the internal pressure is increased, and then held at 1000 atmospheric pressures for six hours. An atmospheric gas is composed of at least one of Ar, $N_2$, $H_2$, and $O_2$.

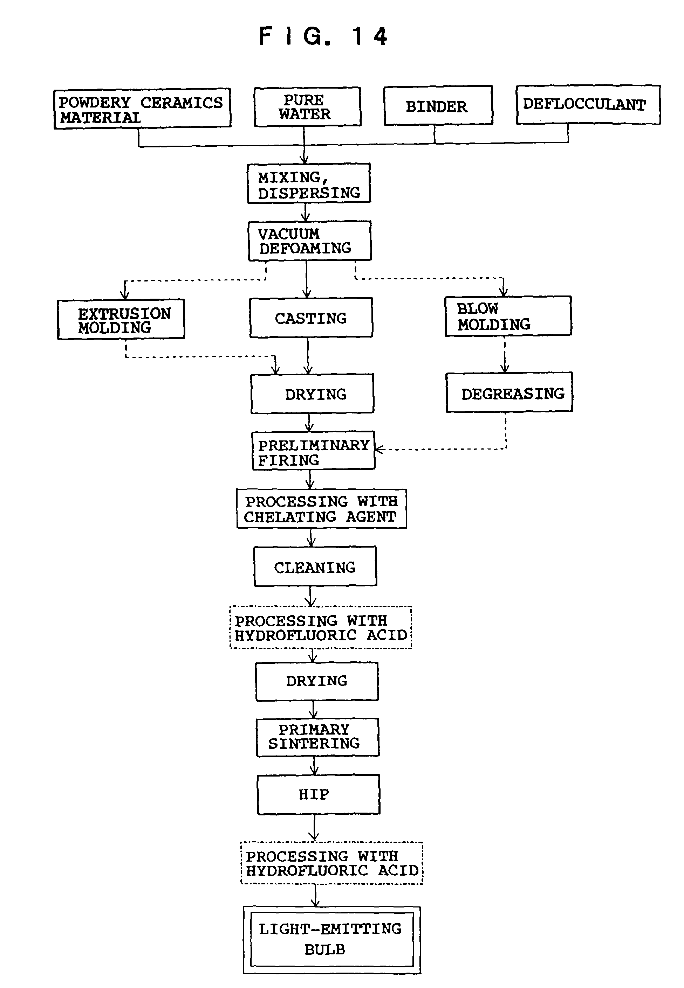

Fig. 14 shows in block form a method of manufacturing light-transmissive ceramics according to a third embodiment of the present invention, which is a modification of the method of manufacturing light-transmissive ceramics according to the second embodiment. In the third embodiment, the ceramics body is processed by a hydrofluoric acid (HF) after it has been processed by the chelating agent or subjected to the HIP step.

When the ceramics body is processed by the chelating agent, Ca and Mg can be reduced to 1/10 of the initial amounts thereof. However, the chelating agent is not as effective with respect to Si. If Si ($SiO_3$) is contained, it gives rise to the following reaction, eliminating a light-emitting substance ($ScI_3$):

$$3SiO_2 + 4ScI_3 \rightarrow 2Sc_2O_3 + 3SiI_4$$

Therefore, after the cleaning step or the HIP step, the ceramics body is processed by a hydrofluoric acid (HF) to remove Si. The ceramics body may processed by a hydrofluoric acid (HF) before it is processed by the chelating agent. However, if the ceramics body is processed by a hydrofluoric acid (HF) before it is processed by the chelating agent, the hydrofluoric acid reacts with calcium or magnesium, generating a product that cannot easily be removed after being processed by the chelating agent. For this reason, the ceramics body should preferably be processed by a hydrofluoric acid (HF) after it is processed by the chelating agent.

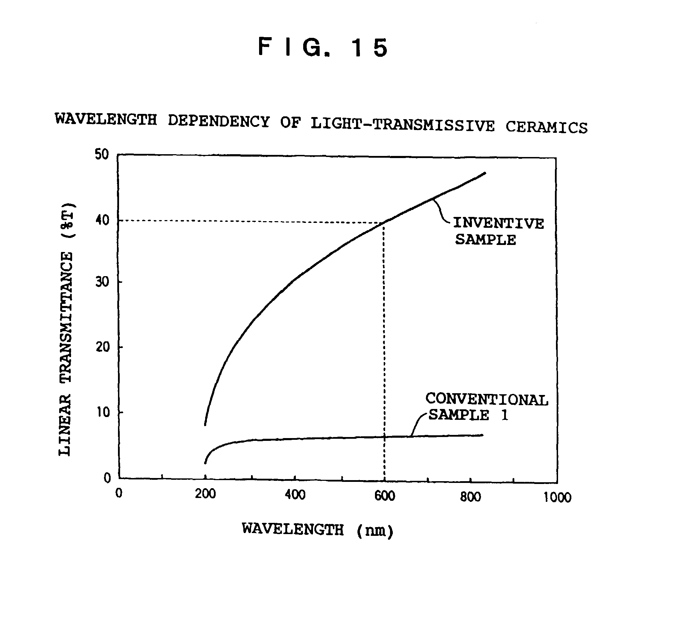

Table 1 below shows, for comparison, characteristics of light-transmissive ceramics produced according to the above method of the present invention (without the processing using the hydrofluoric acid) and characteristics of conventional light-transmissive ceramics. Fig. 15 is a graph showing, for comparison, the linear transmittances of the light-transmissive ceramics according to the present invention and the conventional light-transmissive ceramics (composition: MgO - $Al_2O_3$).

Table 1

| Characteristics | Conventional example 1 | Conventional example 2 | Inventive example |
|---|---|---|---|
| Composition | MgO - $Al_2O_3$ | $SiO_2$ | $(Al,Sc)_2O_3$ - $La_2O_3$ |
| Linear transmittance (%) | 7 | 93 | 40 or higher |
| Diffused transmittance (%) | 95 | 97 | 95 |
| Mechanical strength (MPa) | 235 | 150 | 350 |
| Thermal conductivity (cal/cm·sec·°C) | 0.08 | 0.004 | 0.16 |
| Thermal shock resistance ($\Delta T$°C) | 150 | 40 | 200 |
| Softening point (°C) | 1200 | 900 | 1500 |
| Corrosion resistance index (KJ/mol) | 560 | 856 | 1706 ~ 1819 |
| He gas permeation | No | Yes | No |

It can be understood from Table 1 and Fig. 15 that the light-transmissive ceramics according to the present invention has a linear transmittance of 40 % or higher per thickness of 1 mm with respect to light having a wavelength of 600 nm, a mechanical strength of 235 MPa or higher, a thermal shock resistance of 150 $\Delta$T°C or greater, a thermal conductivity of 0.08 cal/cm·sec·°C or greater, and a softening point of 1200 °C or higher. The inventive light-transmissive ceramics has much better characteristics, almost all except for the linear transmittance, than the conventional light-transmissive ceramics, and has much better characteristics, all including the linear transmittance, than the conventional light-transmissive ceramics of MgO-Al$_2$O$_3$.

According to the second embodiment of the present invention, as described above, the preliminarily fired ceramics body is impregnated with the chelating agent, allowing ions of impurity metals in the preliminarily fired ceramics body to be coupled to the chelating agent. Then, the chelating agent impregnated in the preliminarily fired ceramics body is removed by cleaning. Therefore, the impurities can be removed from the preliminarily fired ceramics body which is closer to the final product. Since impurities are unlikely to be subsequently mixed into the fired ceramic body or light-emitting bulb, the high-intensity discharge lamp has a prolonged service life.

Because the preliminarily fired ceramics body is ultrasonically cleaned, the chelating agent impregnated in the preliminarily fired ceramics body is effectively removed together with the impurity metals. After the preliminarily fired ceramics body is processed by the chelating agent, or after the preliminarily fired ceramics body is fired, the ceramics body is processed by a hydrofluoric acid to effectively remove Si. The chelating agent is composed of EDTA, for example, with a pH ranging from 8 to 10 for mainly removing Ca and Mg and leaving La or the like that is effective to increase corrosion resistance.

A light-emitting bulb made of light-transmissive ceramics manufactured according to the above method has a linear transmittance of 40 % or higher per thickness of 1 mm with respect to light having a wavelength of 600 nm, a mechanical strength of 235 MPa or higher, a thermal shock resistance of 150 $\Delta$T°C or greater, a thermal conductivity of 0.08 cal/cm·sec·°C or greater, and a softening point of 1200 °C or higher.

## INDUSTRIAL APPLICABILITY

Light-transmissive ceramics according to the present invention has excellent characteristics including mechanical strength, linear transmission, corrosion resistance, and thermal shock resistance, and can be used in a variety of applications including a light-emitting bulb for a high-intensity discharge lamp because of such excellent characteristics.

## Claims

1.  A light-transmissive ceramic consisting essentially of a plurality of oxides, the principal component of the oxides being Al$_2$O$_3$ or a mixture of Al$_2$O$_3$ and Sc$_2$O$_3$ and each oxide having a negative standard Gibbs energy of formation ($\Delta$Gf°) having an absolute value greater than 1581.9 KJ/mol, and comprising a composite body in which particles of at least one of said oxides, other than Al$_2$O$_3$, are present between particles of Al$_2$O$_3$, and wherein the particles of Al$_2$O$_3$ have a longer axis of 30 µm or less and a shorter axis of 20 µm or less, and the particles of said other oxide or oxides have a longer axis of 10 µm or less and a shorter axis of 5 µm or less, and said light-transmissive ceramic being produced by subjecting the oxides to hot isostatic pressing at a high temperature under a high pressure.

2.  A ceramic according to claim 1, which contains a principal component of Al$_2$O$_3$ and 0.01-18% by weight of an auxiliary component comprising an oxide selected from the group consisting of La$_2$O$_3$, Ta$_2$O$_3$, Ho$_2$O$_3$, Y$_2$O$_3$, Yb$_2$O$_3$, Dy$_2$O$_3$, Sc$_2$O$_3$, Ce$_2$O$_3$, Er$_2$O$_3$, Lu$_2$O$_3$, Sm$_2$O$_3$ and Tm$_2$O$_3$.

3.  A ceramic according to claim 1 or claim 2, which is in the form of a composite body composed of particles of La$_2$O$_3$ present between particles of the principal oxide component.

4.  A ceramic according to any preceding claim produced by processing the oxides with a chelating agent before being fired, and subjecting the oxides to hot isostatic pressing at a high temperature under a high pressure.

5.  A ceramic according to any preceding claim in the form of a light-emitting bulb for a high intensity discharge lamp.

6.  A method of manufacturing a light-transmissive ceramic according to any of claims 1 to 3, which comprises the steps of mixing a powdery ceramics material, a binder, and a deflocculant to produce a molded body of a predetermined shape, preliminarily firing said molded body, thereafter impregnating the preliminarily fired body with a chelating agent to allow ions of impurity metals in said preliminarily fired body to be coupled to said chelating agent, removing said chelating agent impregnated in said preliminarily fired body by cleaning, firing said preliminarily fired body into a fully fired body, and subjecting the fully fired body to hot isostatic pressing at a high temperature under a high pressure.

7. A method according to claim 6, wherein said chelating agent impregnated in said preliminarily fired body is removed by ultrasonic cleaning.

8. A method according to claim 6 or claim 7, wherein said chelating agent is EDTA and has a pH of 8 to 10 for primarily removing Ca and Mg from said preliminarily fired body.

9. A method according to any of claims 6 to 8 which further comprises the step of processing said preliminarily fired body with hydrofluoric acid before said preliminarily fired body is impregnated with said chelating agent.

10. A method according to any of claims 6 to 8 which further comprises the step of processing said fully fired body with hydrofluoric acid after said preliminarily fired body is fired into said fully fired body.

11. A method of manufacturing a light-transmissive ceramic according to claim 1, comprising the steps of adding 0.01-18 wt% of particles of an oxide in the form of at least one of a salt and an oxide to a powder of highly pure alumina to form a molded ceramics body, holding the molded ceramics body in an atmosphere of at least one of vacuum, atmospheric air, $N_2$, Ar, $H_2$ and water vapor at a primary sintering temperature ranging from $1350°C$ to $1800°C$ for at least 0.5 hour, thereby producing a primary sintered body, and then subjecting the primary sintered body to hot isostatic pressing at a high temperature under a high gas pressure.

12. A method according to claim 11, wherein said primary sintered body is subjected to the hot isostatic pressing at a predetermined temperature ranging from $1300°C$ to $1800°C$ in an atmosphere of at least one gas of Ar, $N_2$, $H_2$, and $O_2$ under a predetermined pressure ranging from 500 atm to 1200 atm.

13. A method according to claim 11, wherein the starting material of said highly pure alumina is derived from a matrix salt of AACH and has a purity of 4 N or higher and particle diameters ranging from $0.05\,\mu m$ to $1.0\,\mu m$, and the starting material of said particles of an oxide comprises $La_2O_3$ having a purity of 3 N or higher and particle diameters ranging from $0.1\,\mu m$ to $2.0\,\mu m$.

14. A method according to claim 13, further comprising the steps of adding at least a binder and a dispersant in a range of from 0.2% to 1% to a mixture of said starting material of said highly pure alumina and said starting material of said particles of an oxide, mixing and dispersing said binder, said dispersant, and said mixture in a wet manner with a ball mill for at least 10 hours, thereby preparing a slurry, and molding said slurry into said molded ceramics body.

15. A method according to claim 14, wherein said slurry is prepared by further adding 20% to 100% of pure water to said binder, said dispersant, and said mixture, and mixing and dispersing said pure water, said binder, said dispersant, and said mixture in a wet manner.

16. A method according to claim 14, further comprising the step of adding an anti-foaming agent to said slurry to defoam the slurry.

17. A method according to claim 15, further comprising the step of casting said slurry into a porous mold to produce said molded ceramics body.

18. A method according to claim 12, wherein said step of subjecting said primary sintered body to the hot isostatic pressing comprises the steps of heating said primary sintered body from room temperature up to said predetermined temperature at a rate of $200°/h$, simultaneously pressurizing said primary sintered body up to said predetermined pressure, and thereafter holding said primary sintered body at said predetermined temperature under said predetermined pressure for about six hours.

19. A method according to claim 18, wherein said primary sintered body is subjected to the hot isostatic pressing by a device comprising at least a pressure vessel, a heater disposed in said pressure vessel, and a crucible disposed in said pressure vessel for holding said primary sintered body therein, and said crucible is filled with said primary sintered body and beads made of either the same materials as the primary sintered body, or a principal material of said primary sintered body, or a grain growth inhibitor.

**20.** A method according to claim 19, wherein said crucible is made of the same materials as the primary sintered body, or a principal material of said primary sintered body, or a grain growth inhibitor.

**21.** A method according to claim 11, wherein said oxide is selected from the group consisting of $La_2O_3$, $Ta_2O_3$, $Ho_2O_3$, $Y_2O_3$, $Yb_2O_3$, $Dy_2O_3$, $Sc_2O_3$, $Ce_2O_3$, $Er_2O_3$, $Lu_2O_3$, $Sm_2O_3$, and $Tm_2O_3$.

**22.** A method according to claim 11, wherein said step of holding the molded ceramics body comprises the steps of heating said molded ceramics body up to a temperature higher than said primary sintering temperature to fire the surface of said molded ceramics body, thereafter cooling said molded ceramics body down to said primary sintering temperature, and continuously firing said molded ceramics body at said primary sintering temperature.


**Patentansprüche**

**1.** Lichtdurchlässige Keramik, bestehend im wesentlichen aus mehreren Oxiden, wobei die Hauptkomponente der Oxide $Al_2O_3$ oder ein Gemisch von $Al_2O_3$ und $Sc_2O_3$ ist, und wobei jedes Oxid eine negative Standard-Gibbs-Bildungsenergie ( Gf°) aufweist, mit einem Absolutwert von größer als 1581,9 KJ/Mol, und umfassend einen Verbundstoffkörper, worin Teilchen von mindestens einem der Oxide, die verschieden von $Al_2O_3$ sind, zwischen Teilchen von $Al_2O_3$ vorliegen, und worin die Teilchen von $Al_2O_3$ eine längere Achse von 30 µm oder weniger und eine kürzere Achse von 20 µm oder weniger und worin die Teilchen des anderen Oxids oder der anderen Oxide eine längere Achse von 10 µm oder weniger und eine kürzere Achse von 5 µm oder weniger aufweisen und worin die lichtdurchlässige Keramik erzeugt wird indem die Oxide einem isostatischen Heißpressen bei einer hohen Temperatur unter einem hohen Druck unterzogen werden.

**2.** Keramik nach Anspruch 1, welche eine Hauptkomponente aus $Al_2O_3$ und 0,01 bis 18 Gew.-% einer Hilfskomponente, umfassend ein Oxid, ausgewählt aus der Gruppe, bestehend aus $La_2O_3$, $Ta_2O_3$, $Ho_2O_3$, $Y_2O_3$, $Yb_2O_3$, $Dy_2O_3$, $Sc_2O_3$, $Ce_2O_3$, $Er_2O_3$, $Lu_2O_3$, $Sm_2O_3$ und $Tm_2O_3$, enthält.

**3.** Keramik nach Anspruch 1 oder Anspruch 2, welche in der Form eines Verbundstoffkörpers vorliegt, der aus Teilchen von $La_2O_3$ gebildet ist, die zwischen Teilchen der Hauptoxidkomponente vorliegen.

**4.** Keramik nach einem der vorhergehenden Ansprüche, hergestellt durch Bearbeiten der Oxide mit einem Chelatisierungsmittel bevor sie gebrannt werden und Unterziehen der Oxide einem isostatischen Heißpressen bei einer hohen Temperatur unter einem hohen Druck.

**5.** Keramik nach einem der vorhergehenden Ansprüche in der Form einer lichtemittierenden Birne für eine Hochintensitätsentladungslampe.

**6.** Verfahren zum Herstellen einer lichtdurchlässigen Keramik gemäß einem der Ansprüche 1 bis 3, umfassend die Schritte des Mischens eines pulverförmigen Keramikmaterials, eines Bindemittels und eines Verflüssigungsmittels, um einen Formkörper mit einer vorbestimmten Form zu bilden, Vorbrennen des Formkörpers, danach Imprägnieren des vorgebrannten Körpers mit einem Chelatisierungsmittel, um es Ionen von Verunreinigungsmetallen in dem vorgebrannten Keramikkörper zu ermöglichen, daß sie an das Chelatisierungsmittel gekoppelt werden, Entfernen des Chelatisierungsmittels, das in den vorgebrannten Keramikkörper imprägniert ist, durch Reinigen, Brennen des vorgebrannten Körpers zu einem vollständig gebrannten Körper und Unterziehen des vollständig gebrannten Körpers einem isostatischen Heißpressen bei einer hohen Temperatur unter einem hohen Druck.

**7.** Verfahren nach Anspruch 6, worin das Chelatisierungsmittel, das in den vorgebrannten Körper imprägniert ist, durch Ultraschallreinigen entfernt wird.

**8.** Verfahren nach Anspruch 6 oder Anspruch 7, worin das Chelatisierungsmittel EDTA ist und einen pH-Wert von 8 bis 10 aufweist, um primär Ca und Mg aus dem vorgebrannten Körper zu entfernen.

**9.** Verfahren nach einem der Ansprüche 6 bis 8, weiterhin umfassend die Schritte des Bearbeitens des vorgebrannten Körpers mit Fluorwasserstoffsäure bevor der vorgebrannte Körper mit dem Chelatisierungsmittel imprägniert wird.

**10.** Verfahren nach einem der Ansprüche 6 bis 8, weiterhin umfassend den Schritt des Bearbeitens des vollständig gebrannten Körpers mit Fluorwasserstoffsäure nachdem der vorgebrannte Körper zu dem vollständig gebrannten Körper gebrannt worden ist.

**11.** Verfahren zum Herstellen einer lichtdurchlässigen Keramik gemäß Anspruch 1, umfassend die Schritte des Zugebens von 0,01 bis 18 Gew.-% Teilchen eines Oxids in der Form eines Salzes und/oder eines Oxids zu einem Pulver von hochreinem Aluminiumoxid, um einen Keramikformkörper zu bilden, Halten des Keramikformkörpers in einer Atmosphäre aus einem Vakuum, atmosphärischer Luft, $N_2$, Ar, $H_2$ und/oder Wasserdampf, bei einer primären Sintertemperatur im Bereich von 1350 °C bis 1800 °C für mindestens 0,5 Stunden, wobei ein primärer Sinterkörper erzeugt wird, und dann Behandeln des primären Sinterkörpers durch isostatisches Heißpressen bei einer hohen Temperatur und einem hohen Gasdruck.

**12.** Verfahren nach Anspruch 11, worin der primäre Sinterkörper einem isostatischen Heißpressen bei einer vorbestimmten Temperatur im Bereich von 1300 °C bis 1800 °C in einer Gasatmosphäre aus Ar, $N_2$, $H_2$ und/oder $O_2$, unter einem vorbestimmten Druck im Bereich von 500 atm bis 1200 atm unterzogen wird.

**13.** Verfahren nach Anspruch 11, worin das Ausgangsmaterial des hochreinen Aluminiumoxids von einem Matrixsalz von AACH stammt und eine Reinheit von 4 N oder höher und Teilchendurchmesser im Bereich von 0,05 μm bis 1,0 μm aufweist, und worin das Ausgangsmaterial der Teilchen eines Oxids $La_2O_3$ mit einer Reinheit von 3 N oder höher und Teilchendurchmessern im Bereich von 0,1 μm bis 2,0 μm umfaßt.

**14.** Verfahren nach Anspruch 13, weiterhin umfassend die Schritte des Zugebens von mindestens einem Bindemittel und einem Dispergiermittel in einem Bereich von 0,2 % bis 1 % zu einem Gemisch aus dem Ausgangsmaterial aus dem hochreinem Aluminiumoxid und dem Ausgangsmaterial der Teilchen eines Oxids, nasses Mischen und Dispergieren des Bindemittels, des Dispergiermittels und des Gemisches mit einer Kugelmühle für mindestens 10 Stunden, wodurch eine Aufschlämmung hergestellt wird, und Formen der Aufschlämmung zu einem Keramikformkörper.

**15.** Verfahren nach Anspruch 14, worin die Aufschlämmung hergestellt wird durch weiteres Zugeben von 20 % bis 100 % Reinwasser zu dem Bindemittel, dem Dispergiermittel und dem Gemisch und nasses Mischen und Dispergieren des Reinwassers, des Bindemittels, des Dispergiermittels und des Gemisches.

**16.** Verfahren nach Anspruch 14, weiterhin umfassend den Schritt des Zugebens eines Antischaummittels zu der Aufschlämmung, um die Aufschlämmung zu entschäumen.

**17.** Verfahren nach Anspruch 15, weiterhin umfassend den Schritt des Gießens der Aufschlämmung in eine poröse Form, um den Keramikformkörper zu erzeugen.

**18.** Verfahren nach Anspruch 12, worin der Schritt des Unterziehens des primären Sinterkörpers dem isostatischen Heißpressen die Schritte des Erhitzens des primär gesinterten Körpers von Raumtemperatur bis zu der vorbestimmten Temperatur mit einer Rate von 200 °/h, gleichzeitiges Unterdrucksetzen des primär gesinterten Körpers bis zu dem vorbestimmten Druck und danach Halten des primär gesinterten Körpers bei der vorbestimmten Temperatur und dem vorbestimmten Druck für etwa 6 Stunden umfaßt.

**19.** Verfahren nach Anspruch 18, worin der primär gesinterte Körper einem isostatischen Heißpressen unterzogen wird, durch eine Vorrichtung, umfassend mindestens einen Druckbehälter, einen Heizer, der in dem Druckbehälter angeordnet ist und einen Tiegel, der in dem Druckbehälter angeordnet ist, um den primären Sinterkörper darin aufzunehmen, und worin der Tiegel mit dem primären Sinterkörper und Kügelchen gefüllt ist, die hergestellt sind entweder aus den gleichen Materialien wie der primäre Sinterkörper, oder einem Hauptmaterial des primären Sinterkörpers, oder einem Kornwachstumsinhibitor.

**20.** Verfahren nach Anspruch 19, worin der Tiegel aus den gleichen Materialien hergestellt ist wie der primäre Sinterkörper, oder einem Hauptmaterial des primären Sinterkörpers, oder einem Kornwachstumsinhibitor.

**21.** Verfahren nach Anspruch 11, worin das Oxid ausgewählt wird aus der Gruppe, bestehend aus $La_2O_3$, $Ta_2O_3$, $Ho_2O_3$, $Y_2O_3$, $Yb_2O_3$, $Dy_2O_3$, $Sc_2O_3$, $Ce_2O_3$, $Er_2O_3$, $Lu_2O_3$, $Sm_2O_3$ und $Tm_2O_3$.

**22.** Verfahren nach Anspruch 11, worin der Schritt des Haltens des Keramikformkörpers die Schritte des Erhitzens des Keramikformkörpers bis zu einer Temperatur von höher als der primären Sintertemperatur, um die Oberfläche des Keramikformkörpers zu brennen, hiernach Kühlen des Keramikformkörpers auf die primäre Sintertemperatur und kontinuierliches Brennen des Keramikformkörpers bei der primären Sintertemperatur umfaßt.

**Revendications**

1. Céramique transmettant la lumière, constituée principalement d'une pluralité d'oxydes, le composant principal des oxydes étant $Al_2O_3$ ou un mélange d'$Al_2O_3$ et de $Sc_2O_3$, et chaque oxyde ayant une énergie de Gibbs standard de formation ($\Delta Gf°$) négative dont la valeur absolue est supérieure à 1581.9 KJ/mol, et comprenant un corps composite dans lequel des particules d'au moins un desdits oxydes, autre qu'$Al_2O_3$, sont présentes entre les particules d'$Al_2O_3$, et dans lequel les particules d'$Al_2O_3$ ont un plus grand axe de 30 $\mu$m ou moins et un plus petit axe de 20 $\mu$m ou moins, et les particules dudit autre oxyde ou desdits autres oxydes ont un plus grand axe de 10 $\mu$m ou moins et un plus petit axe de 5 $\mu$m ou moins, et ladite céramique transmettant la lumière étant produite en soumettant les oxydes à une compression isostatique à chaud à une température élevée, sous une pression élevée.

2. Céramique selon la revendication 1, qui contient un composant principal d'$Al_2O_3$ et 0,01 - 18% en poids d'un composant auxiliaire comprenant un oxyde choisi dans le groupe constitué de $La_2O_3$, $Ta_2O_3$, $Ho_2O_3$, $Y_2O_3$, $Yb_2O_3$, $Dy_2O_3$, $Sc_2O_3$, $Ce_2O_3$, $Er_2O_3$, $Lu_2O_3$, $Sm_2O_3$ et $Tm_2O_3$.

3. Céramique selon la revendication 1 ou la revendication 2, qui se présente sous la forme d'un corps composite constitué de particules de $La_2O_3$ présentes entre les particules du principal composant oxyde.

4. Céramique selon l'une quelconque des revendications précédentes, produite en traitant des oxydes avec un agent chélatant avant d'être cuite, et en soumettant les oxydes à une compression isostatique à chaud à une température élevée sous une pression élevée.

5. Céramique selon l'une quelconque des revendications précédentes, sous la forme d'une ampoule à rayonnement lumineux pour une lampe à décharge haute intensité.

6. Procédé de fabrication d'une céramique transmettant la lumière selon l'une quelconque des revendications 1 à 3, qui comprend les étapes consistant à mélanger un matériau céramique en poudre, un liant, et un défloculant pour produire un corps moulé ayant une forme prédéterminée, initialement en cuisant ledit corps moulé, après cela en imprégnant le corps préalablement cuit avec un agent chélatant pour permettre aux ions des impuretés métalliques présentes dans ledit corps préalablement cuit de se coupler audit agent chélatant, en retirant par lavage ledit agent chélatant imprégné dans ledit corps préalablement cuit, en cuisant ledit corps préalablement cuit en un corps totalement cuit, et en soumettant le corps totalement cuit à une compression isostatique à chaud à une température élevée, sous une pression élevée.

7. Procédé selon la revendication 6, dans lequel ledit agent chélatant imprégné dans ledit corps préalablement cuit est éliminé par nettoyage aux ultrasons.

8. Procédé selon la revendication 6 ou la revendication 7, dans lequel ledit agent chélatant est l'EDTA et a un pH de 8 à 10, essentiellement dans le but d'éliminer le Ca et le Mg dudit corps préalablement cuit.

9. Procédé selon l'une quelconque des revendications 6 à 8, qui comprend également l'étape consistant à traiter ledit corps préalablement cuit avec de l'acide fluorhydrique avant que ledit corps préalablement cuit soit imprégné avec ledit agent chélatant.

10. Procédé selon l'une quelconque des revendications 6 à 8, qui comprend également l'étape consistant à traiter ledit corps totalement cuit avec de l'acide fluorhydrique après avoir cuit ledit corps préalablement cuit en ledit corps totalement cuit.

11. Procédé de fabrication d'une céramique transmettant la lumière selon la revendication 1, comprenant les étapes consistant à ajouter 0,01 - 18% en poids de particules d'un oxyde sous la forme d'au moins un élément parmi un sel et un oxyde à une poudre d'alumine extrêmement pure pour former un corps céramique moulé, à maintenir le corps céramique moulé dans une atmosphère consistant en au moins l'une des possibilités parmi le vide, l'air atmosphérique, $N_2$, Ar, $H_2$ et de la vapeur d'eau à une température de frittage primaire comprise entre 1350°C et 1800°C pendant au moins 0,5 heure, en produisant de cette façon un corps fritté primaire, et ensuite en soumettant le corps fritté primaire à une compression isostatique à chaud à une température élevée sous une pression gazeuse élevée.

12. Procédé selon la revendication 11, dans lequel ledit corps fritté primaire est soumis à la compression isostatique à chaud, à une température prédéterminée comprise entre 1300°C et 1800°C, sous une atmosphère d'au moins un gaz parmi Ar, $N_2$, $H_2$ et $O_2$, sous une pression prédéterminée comprise entre 500 atm et 1200 atm.

13. Procédé selon la revendication 11, dans lequel le matériau de départ de ladite alumine extrêmement pure est dérivé d'une matrice saline de AACH (hydroxycarbonate d'ammonium et d'aluminium) et a une pureté de 4 N ou supérieure et des diamètres particulaires comprise entre 0,05 μm et 1,0 μm, et le produit de départ desdites particules d'oxyde comprend du $La_2O_3$ ayant une pureté de 3 N ou supérieure et des diamètres particulaires comprise entre 0,1 μm et 2,0 μm.

14. Procédé selon la revendication 13, comprenant en outre les étapes consistant à ajouter au moins un liant et un dispersant dans un intervalle de 0,2% à 1% à un mélange dudit matériau de départ de ladite alumine extrêmement pure et dudit produit de départ desdites particules d'oxyde, à mélanger et à disperser ledit liant, ledit dispersant, et ledit mélange à l'état humide avec un broyeur à boulets pendant au moins 10 heures, en préparant de cette façon une suspension, et à mouler ladite suspension en ledit corps céramique moulé.

15. Procédé selon la revendication 14, dans lequel ladite suspension est préparée en ajoutant également 20% à 100% d'eau pure audit liant, audit dispersant, et audit mélange, et en mélangeant et en dispersant ladite eau pure, ledit liant, et ledit dispersant, et ledit mélange à l'état humide.

16. Procédé selon la revendication 14, comprenant également l'étape consistant à ajouter un agent antimousse à ladite suspension pour démousser la suspension.

17. Procédé selon la revendication 15, comprenant en outre l'étape consistant à couler ladite suspension dans un moule poreux pour produire ledit corps en céramique moulé.

18. Procédé selon la revendication 12, dans lequel ladite étape consistant à soumettre ledit corps fritté primaire à la compression isostatique à chaud comprend les étapes consistant à chauffer ledit corps fritté primaire depuis la température ambiante jusqu'à ladite température prédéterminée à une vitesse de 200°C/h, à pressuriser simultanément ledit corps fritté primaire jusqu'à ladite pression prédéterminée, et après cela à maintenir ledit corps fritté primaire à ladite température prédéterminée sous ladite pression prédéterminée pendant environ six heures.

19. Procédé selon la revendication 18, dans lequel ledit corps fritté primaire est soumis à la compression isostatique à chaud par utilisation d'un dispositif comprenant au moins une cuve sous pression, un moyen de chauffage placé dans ladite cuve sous pression, et un creuset placé dans ladite cuve sous pression pour maintenir ledit corps fritté primaire dans celle-ci, et ledit creuset est rempli avec ledit corps fritté primaire et des billes fabriquées à partir soit des mêmes matériaux que le corps fritté primaire, soit d'un matériau principal dudit corps fritté primaire, soit d'un inhibiteur de la croissance granulométrique.

20. Procédé selon la revendication 19, dans lequel ledit creuset est fabriqué à partir des mêmes matériaux que le corps fritté primaire, ou d'un matériau principal dudit corps fritté primaire, ou d'un inhibiteur de la croissance granulométrique.

21. Procédé selon la revendication 11, dans lequel ledit oxyde est choisi dans le groupe constitué de $La_2O_3$, $Ta_2O_3$, $Ho_2O_3$, $Y_2O_3$, $Yb_2O_3$, $Dy_2O_3$, $Sc_2O_3$, $Ce_2O_3$, $Er_2O_3$, $Lu_2O_3$, $Sm_2O_3$, et $Tm_2O_3$.

22. Procédé selon la revendication 11, dans lequel ladite étape de maintient du corps céramique moulé comprend les étapes consistant à chauffer ledit corps céramique moulé jusqu'à une température supérieure à ladite température du frittage primaire pour cuire la surface dudit corps céramique moulé, après cela à refroidir ledit corps céramique moulé jusqu'à ladite température du frittage primaire, et à cuire en continu ledit corps céramique moulé à ladite température de frittage primaire.

# F I G. 1

```
┌──────────┐   ┌──────────┐   ┌────────┐        ┌──────────────┐
│  Al₂O₃   │   │  La₂O₃   │   │  PURE  │        │   BINDER,    │
│ MATERIAL │   │ MATERIAL │   │ WATER  │        │  DISPERSANT  │
└──────────┘   └──────────┘   └────────┘        └──────────────┘
                                        (EXTRUSION MOLDING,
                                              CASTING)
```

$Al_2O_3$ MATERIAL — $La_2O_3$ MATERIAL — PURE WATER — BINDER, DISPERSANT (EXTRUSION MOLDING, CASTING)

→ WET MIXING, DISPERSING

← DEFOAMING AGENT

→ VACUUM DEFOAMING

EXTRUSION MOLDING — CASTING — BLOW MOLDING

DRYING — DEGREASING

PRIMARY SINTERING

HIP

MACHINING

PRODUCT

# F I G.  2

VACUUM PUMP

COMPRESSOR

# F I G. 3

# F I G. 4

F I G. 5 (A1)

$La_2O_3$ 0.5wt% (1580°C HIP)

F I G. 5 (A2)

$La_2O_3$ 0.5wt% (1800°C HIP)

F I G. 5 (A3)

$La_2O_3$ 0.06wt% (1580°C HIP)

## FIG. 6 (B1)

La$_2$O$_3$ NOT ADDED (1350°C HIP)

## FIG. 6 (B2)

MgO 0.05 wt% H$_2$ ATMOSPHERE

## FIG. 6 (B3)

La$_2$O$_3$ NOT ADDED (1800°C HIP)

EP 0 667 322 B1

# F I G. 7

DISTRIBUTION (a.u.)

AVERAGE CRYSTAL PARTICLE DIAMETER OF $Al_2O_3$ (μm)

# F I G. 8

● LINEAR TRANSMITTANCE (%T)

■ BENDING STRENGTH (MPa)

▲ THERMAL SHOCK RESISTANCE ΔT (°C)

AVERAGE CRYSTAL PARTICLE DIAMETER OF $Al_2O_3$ (μm)

# F I G. 9

# F I G. 1 0

# F I G. 1 1

# F I G. 1 2

INVENTIVE SAMPLE PRIOR TO HEAT TREATMENT ◦········◦

CONVENTIONAL SAMPLE PRIOR TO HEAT TREATMENT ●········●

INVENTIVE SAMPLE SUBSEQUENT TO HEAT TREATMENT ◦————◦
(1500℃)

CONVENTIONAL SAMPLE SUBSEQUENT TO HEAT TREATMENT ●————●
(1500℃)

# F I G. 1 3

```
┌──────────────────┐  ┌──────────────┐  ┌──────────┐  ┌──────────────┐
│ POWDERY CERAMICS │  │  PURE WATER  │  │  BINDER  │  │ DEFLOCCULANT │
│ MATERIAL         │  │              │  │          │  │              │
└──────────────────┘  └──────────────┘  └──────────┘  └──────────────┘
```

- MIXING, DISPERSING
- VACUUM DEFOAMING
- EXTRUSION MOLDING
- CASTING
- BLOW MOLDING
- DRYING
- DEGREASING
- PRELIMINARY FIRING
- PROCESSING WITH CHELATING AGENT
- CLEANING
- DRYING
- PRIMARY SINTERING
- HIP
- LIGHT-EMITTING BULB

# F I G. 1 4

```
┌──────────────────┐  ┌─────────┐  ┌─────────┐  ┌──────────────┐
│ POWDERY CERAMICS │  │  PURE   │  │ BINDER  │  │ DEFLOCCULANT │
│ MATERIAL         │  │  WATER  │  │         │  │              │
└──────────────────┘  └─────────┘  └─────────┘  └──────────────┘
                 ┌─────────────────┐
                 │ MIXING,         │
                 │ DISPERSING      │
                 └─────────────────┘
                 ┌─────────────────┐
                 │ VACUUM          │
                 │ DEFOAMING       │
                 └─────────────────┘
┌──────────────┐  ┌─────────────┐  ┌─────────────┐
│ EXTRUSION    │  │  CASTING    │  │ BLOW        │
│ MOLDING      │  │             │  │ MOLDING     │
└──────────────┘  └─────────────┘  └─────────────┘
                 ┌─────────────┐  ┌─────────────┐
                 │  DRYING     │  │ DEGREASING  │
                 └─────────────┘  └─────────────┘
                 ┌─────────────────┐
                 │ PRELIMINARY     │◄┄┄┄┄┄
                 │ FIRING          │
                 └─────────────────┘
                 ┌─────────────────────┐
                 │ PROCESSING WITH     │
                 │ CHELATING AGENT     │
                 └─────────────────────┘
                 ┌─────────────────┐
                 │  CLEANING       │
                 └─────────────────┘
                 ┌─────────────────────┐
                 │ PROCESSING WITH     │
                 │ HYDROFLUORIC ACID   │
                 └─────────────────────┘
                 ┌─────────────────┐
                 │  DRYING         │
                 └─────────────────┘
                 ┌─────────────────┐
                 │ PRIMARY         │
                 │ SINTERING       │
                 └─────────────────┘
                 ┌─────────────────┐
                 │  HIP            │
                 └─────────────────┘
                 ┌─────────────────────┐
                 │ PROCESSING WITH     │
                 │ HYDROFLUORIC ACID   │
                 └─────────────────────┘
                 ┌─────────────────┐
                 │ LIGHT-EMITTING  │
                 │ BULB            │
                 └─────────────────┘
```

# F I G. 1 5

WAVELENGTH DEPENDENCY OF LIGHT-TRANSMISSIVE CERAMICS